Europäisches Patentamt

European Patent Office

Office européen des brevets

(11) Publication number:

0 344 539
A2

## (12) EUROPEAN PATENT APPLICATION

(21) Application number: 89109013.6

(22) Date of filing: 19.05.89

(51) Int. Cl.⁴: H04Q 7/04 , H04B 7/26 , H04B 1/10

(30) Priority: 02.06.88 US 201238
02.06.88 US 203363

(43) Date of publication of application:
06.12.89 Bulletin 89/49

(84) Designated Contracting States:
AT BE CH DE ES FR GB GR IT LI LU NL SE

(71) Applicant: MOTOROLA, INC.
1303 East Algonquin Road
Schaumburg Illinois 60196(US)

(72) Inventor: Rabe, Duane C.
2702 Millstone
Rolling Meadows Illinois 60008(US)
Inventor: Mitzlaff, James E.
1727 N. Chestnut
Arlington Heights Illinois 60004(US)

(74) Representative: Hudson, Peter David et al
MOTOROLA European Intellectual Property
Operations Jays Close Viables Industrial
Estate
Basingstoke, Hampshire RG22 4PD(GB)

(54) Control technique for an rf communication system.

(57) An interference detecting circuit is used in a cellular radiotelephone communication system which employs angular modulated frequencies in order to determine when to change the communication process so as to maintain the integrity of the communication path. For example, when the circuit detects an excessive amount of multipath or co-channel interference on a channel serving an active call, the system attempts to handoff the call to another channel. Also, when the circuit detects an excessive amount of multipath or co-channel interference on a channel serving an active call, the system may decrease the effective data bit rate. The circuit includes a logarithmic envelope detector 150 for receiving a channel's angular modulated signal and for providing a log envelope output signal, a high pass filter 152 for removing a particular range of undesired frequencies from the log envelope output signal, and a level detector 154 for indicating the level of filtered output signal. The output of the level detector represents the amount of interference on the angular modulated frequency signal. A microcomputer analyzes the amount of interference to determine when such communication process changes are desired or to determine if a handoff is required.

## CONTROL TECHNIQUE FOR AN RF COMMUNICATION SYSTEM

### Field of the Invention

The present invention relates to radio frequency (RF) communication systems, particularly to controlling the signal quality of communication paths in such systems, and, more particularly, to interference detection in cellular radiotelephone communication systems.

### Description of the Prior Art

In RF communication systems employing angle modulation, i.e., frequency modulation (FM) or phase modulation (PM) for transmission of data, communication is often impaired as a result of co-channel interference and/or multipath interference. Co-channel interference is caused by spurious transmissions of signals on channels adjacent to the communication channel of concern. Multipath interference typically results when a signal is deflected off many structures, creating multiple reception paths, and is received as a number of multiple signals, each offset in time. Both types of interference inhibit the quality of communication to the extent that the communication channel can become no longer useful.

In order to avoid such channel degradation, communication systems have practiced error coding techniques that involve monitoring the bit error rate (BER) of the received signal, and, in response to the BER exceeding a threshold, changing the communication process to improve the integrity of the communication. For example, this is sometimes accomplished by decreasing the effective bit rate. Decreasing the effective bit rate is possible either by increasing the error coding in the signal, or by directly decreasing the transmission bit rate. Of course, there are a variety of other techniques for improving the integrity of the communication.

Before this type of interference becomes unacceptable, a cellular communication system should, if possible, switch (or hand-off) the communication channel to another cell to prevent disrupting the call.

In any case, overcoming co-channel and/or multipath interference in this manner, requires that the interference be accurately detected, and that the system knows the extent to which the co-channel and multipath interference are contributing factors. Known techniques for such detection have not always been acceptable.

For example, a technique for detecting the extent to which the co-channel interference is contributing to the signal degradation is described in U.S. Patent No. 4,561,114, Kozono et al. ('114) and "Co-Channel Interference Measurement Method for Mobile Communication", IEEE Transactions on Vehicular Technology, Vol. VT-36, No. 1, Feb. 1987, where it is proposed that co-channel interference can be detected in a narrowband communication system by looking for a high frequency beat signal produced by an interfering co-channel signal. The interference is detected based on the frequency content of the envelope of the received signal to distinguish between shadow fading (discussed later in more detail) and co-channel interference. This is accomplished through a digital analysis technique which samples a first set of signals on a relatively infrequent basis, and samples an overlapping second set of signals on a relatively frequent basis. The extraction of a substantial number of samples from the first set of signals allows the system to average out interference due to fading, while the extraction of the second set of signals allows the system to obtain the average level of the high frequency beat signal. The average level of the high frequency beat signal indicates the amount of interference caused by co-channel interference.

Unfortunately, the system described exhibits the disadvantages enumerated below. The circuitry required for digitally analyzing the samples is complex, burdensome and expensive and its response time is dependent upon the number of samples required from the first set of samples in order to average out interference due to fading. Additionally, the speed of the required digital processing circuitry limits the band-width; therefore, the speed limits the bit rate at which data can be communicated.

Overcoming multipath interference is accomplished in most communication systems by implementing the principle discussed above, i.e., transmitting data at relatively low bit rates. Unfortunately, low bit rate communication is cumbersome and becoming more and more unacceptable as system designers attempt to meet the demands for high capacity communication systems which can efficiently accommodate voice as well as data communication.

Accordingly, a communication interference detection technique is needed which overcomes the foregoing deficiencies.

## Objects of the Invention

It is a general object of the present invention to provide an interference detection and error correction coding system which overcomes the above-mentioned shortcomings.

It is a more particular object of the present invention to provide a multipath interference detection circuit having an output signal that can be used in a cellular radiotelephone communication system to aid in the system's determination of when a handoff should be implemented.

It is another object of the present invention to provide an interference detection circuit that detects and indicates a certain level of multipath interference on an angular modulated signal by looking at the output of a logarithmic envelope detector which receives the modulated signal.

It is yet an additional object of the present invention to provide an interference detection circuit that detects and indicates a certain level of multipath and/or co-channel interference on an angular modulated signal by looking at the output of a logarithmic envelope detector which receives the modulated signal while, at the same time, ignoring any interference due to shadow fading.

It is a more particular object of the present invention to provide an interference detection system which can be used in a cellular radiotelephone communication system to determine when a change in the level of error coding is required.

It is another object of the present invention to provide an interference detection system which can be used to implement a change in the level of error coding to overcome multipath or co-channel interference in such communication paths.

## Brief Description of the Drawings

The features of the present invention which are believed to be novel are set forth with particularity in the appended claims. The invention, together with further objects and advantages thereof, may best be understood by making reference to the following description taken together with the accompanying drawings, in which reference numerals identify the elements, and wherein:

Fig. 1a is a diagram of a cellular communication system including two base sites and their respective equipment, according to the present invention;

Fig. 1b is an expanded diagram of portions of the radio equipment 115, 119, or 130 of Fig. 1a that includes an interference detector circuit 135, according to the present invention;

Fig. 1c is an expanded diagram of the interference detector circuit 135 illustrated in Fig. 1b, according to the present invention;

Fig. 2 is an expanded diagram of blocks 160 and 162 illustrated in Fig. 1c, according to the present invention;

Fig. 3 is an alternate embodiment of block 154 of the interference detector circuit 135 illustrated in Fig. 1b, according to the present invention;

Fig. 4a is a flow chart, according to the present invention, which may be implemented by the microcomputer 138 of Fig. 1b to effect a handoff in a cellular system using the interference detector circuit 135 illustrated in Fig. 1b; and

Fig. 4b is a flow chart, according to the present invention, which may be implemented by a microcomputer to effect an error correction coding implementation in a cellular system.

## Detailed Description of the Preferred Embodiment

The arrangement disclosed in this specification has particular use for detecting interference on a radio frequency (RF) communication channel in a cellular radiotelephone communication system. More particularly, the arrangement disclosed herein is directed to employing the detection of such interference in order to determine when to handoff radiotelephone calls between cells in a cellular radiotelephone communication system or in order to implement a level of error correction coding between radiotelephones and base site equipment in a cellular radiotelephone communication system.

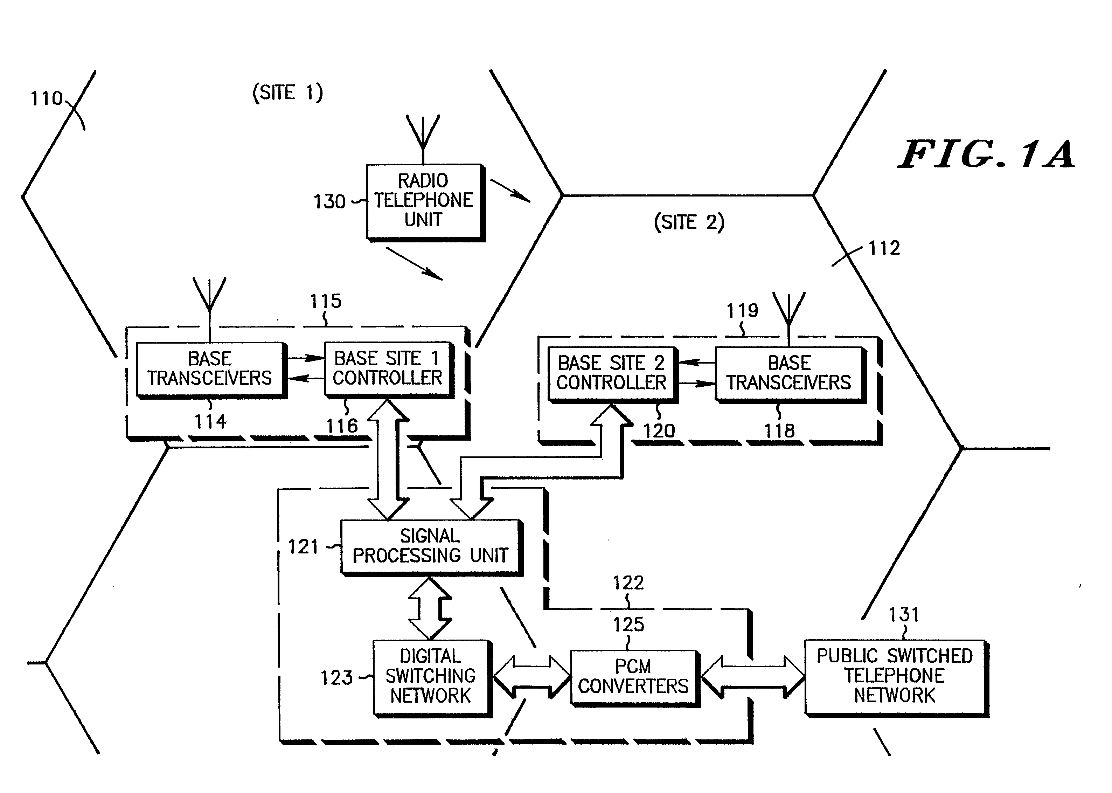

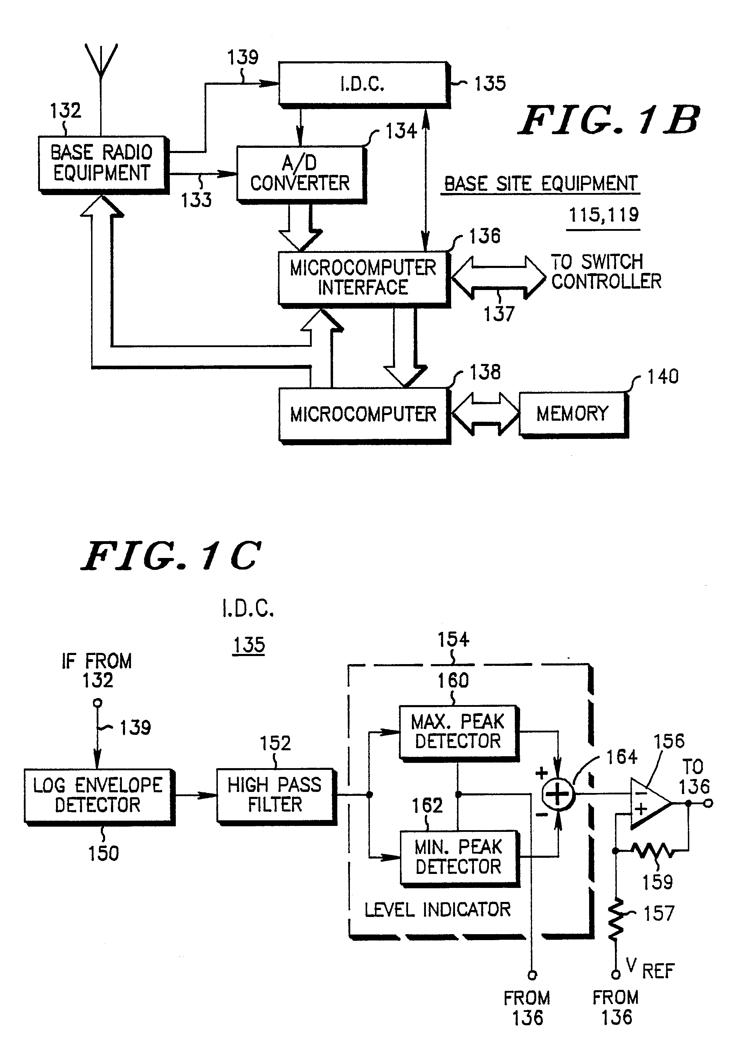

Figs. 1a, 1b and 1c respectively illustrate a cellular system, base site equipment used in the system and interference detection circuitry used in the base site equipment, according to the present invention. The interference detection circuitry provides a basis on which the need for a handoff is determined. The interference detection circuitry also provides a basis on which the need for changing error correction coding is present.

The system in Fig. 1a includes base site equipment 115 and 119 for two geographic radio frequency (RF) coverage areas (cells) 110 and 112, respectively. For cell 110, the base site equipment 115 includes a set of base transceivers 114 and a base site (1) controller 116. For cell 112, the base site equipment 119 includes a set of base transceivers 118 and a base site (2) controller 120 with substantially identical circuitry as the base site equipment 115.

For purposes of exemplifying RF communication and a handoff operation according to the present invention, a radiotelephone unit 130 is depicted communicating with base site equipment 115 within the respective coverage area and in transition from cell 110 to cell 112.

Overall control of the base site equipment 115 and 119 is provided by a signal processing unit 121 of a cellular switch controller 122. The switch controller 122 also includes a digital switching network 123 for controlling the call switching operation between a public switched telephone network (PSTN) 131 and the base site equipment 115 and 119. A set of pulse code modulation (PCM) converters 125 are included in the cellular switch controller 122 for interfacing the system to the PSTN 131. For general details of a conventional cellular system, reference may be made to "Cellular Voice and Data Radiotelephone System", Labedz et al., U.S. Patent No. 4,654,867. For further details of a conventional cellular switch controller, reference may be made to U.S. Pat. No. 4,268,722, Little et al. Both of the above U.S. patents are assigned to the same assignee and incorporated herein by reference.

In Fig. 1b, the receiver portion of the base site equipment 115 or 119 is shown in expanded form. It should be noted that these blocks can also represent the receiver portion of the radio telephone unit 130. Representing radio telephone unit 130, this circuitry may be used for reporting the signal quality to the system for use in handoff control and for use in changing the error correction coding. Alternatively, the radiotelephone unit 130 can determine a level of signal quality degradation and request that the system initiate a handoff or request that the system change the level of error correction coding for the respective communication.

Fig. 1b includes conventional base radio equipment 132 for communicating with radiotelephones within its associated coverage area. The voice paths between the switch controller 122 (Fig. 1) and the base radio equipment 115 or 119 are depicted as 137.

The intelligence control of the base site equipment is provided by a microcomputer 138. The microcomputer 138 is used to control the radio equipment 132 and to intercouple the base site equipment with the signal processing equipment 121 of the switch controller 122 (Fig. 1a). An analog to digital converter (ADC) circuit 134 is used for receiving output signal, via a signal path 133, from a scan receiver (not shown) within the base radio equipment 132. The output signal of the scanning receiver contains signals received from the radiotelephones, and, after being converted by the ADC circuit 134, such signals are analyzed by the microcomputer 138 to obtain signal information (including radiotelephone identification-related and signal quality information such as RSSI and SAT signals) from radiotelephone units in active calls. A microcomputer interface circuit 136 is used to interface the ADC circuit 134 and the switch controller 122 with the microcomputer 138. For further details of base site equipment, reference may be made to U.S. Pat. Nos. 4,549,311-McLaughlin, supra, and 4,485,486-Webb et al., and 4,696,027-Bonta, the latter of which are also assigned to the same assignee and incorporated herein by reference.

Additionally, an interference detection circuit (IDC) is employed in conjunction with the A/D converter 134 to provide the microcomputer 138 with supplemental signal information regarding the signal quality of radiotelephones in active calls. The signal quality information is developed from an intermediate frequency (IF) signal provided at a signal path 139 by the base radio equipment 132, and is used to inform the microcomputer 138 as to the level of co-channel interference and/or multipath interference on the channel being received by the base radio equipment.

The information being received via the A/D converter 134 is synchronized with the information being received by the IDC 135 so that the microcomputer can determine which radio call is being contaminated with the interference It should be noted that for each scan receiver circuit receiving data on a communication channel, a corresponding IDC 135 is provided therewith to simultaneously indicate the level of interference on the communication channel.

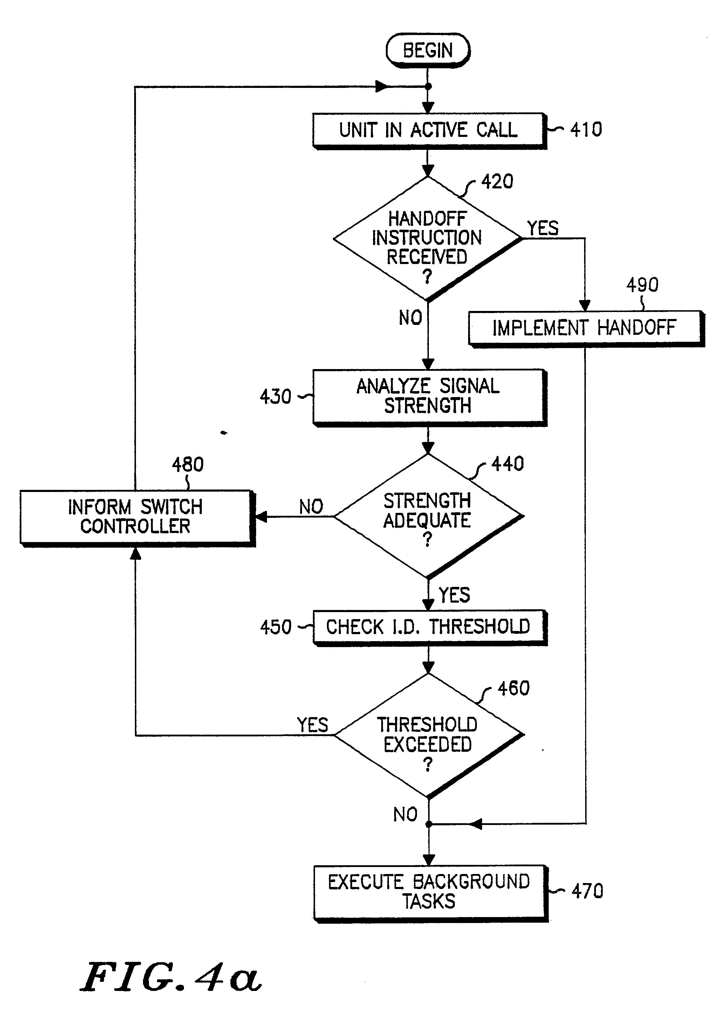

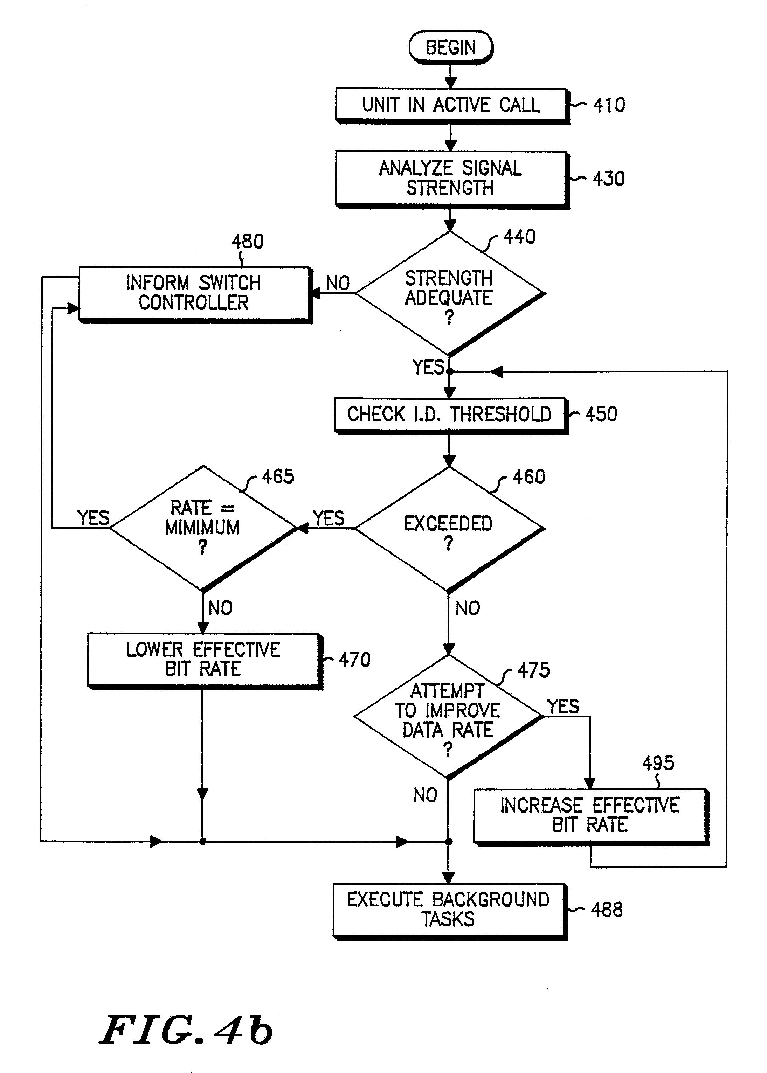

When a threshold level of such interference is detected contaminating an active call. the switch controller is informed so that a determination involving the need for a change in the level of error correction coding or a determination involving the need for a handoff can be made. If a change in coding is required, the base site equipment hosting the active call selects the level of error correction coding and instructs the radiotelephone to implement the selected error correction coding (discussed in more detail with Fig. 4).

If handoff is required, the base site equipment hosting the active call instructs the handoff information to the radiotelephone (discussed in more detail with Fig. 4).

The IDC 135 in Fig. 1b is arranged to take advantage of the following two facts. The first fact is well-known: the frequency of amplitude fluctuations imposed on an angle modulated signal resulting from co-channel interference produces a higher frequency variation in the envelope than is produced by other types of fading such as shadow fading or Rayleigh fading. Shadow fading is often caused when the radiotelephone unit enters a different transmission medium, entering a tunnel, which causes variation in the amplitude of the received signal. Rayleigh fading is caused by vehicle motion through a medium containing multiple signals arriving at different angles, with or without time delay. For a thorough discussion of such fading, reference may be made to "Microwave Mobile Communications", W.C. Jakes, Wiley & Sons, 1974, incorporated herein by reference. Hereinafter, "multipath" means signals having differential path delays exceeding a substantial fraction of the data symbol duration, e.g., where the differential path delay is more than a quarter of the data symbol duration.

The second fact results from a discovery, made pursuant to the present invention, involving the use of high data rate communication in an environment conducive to multipath interference. Essentially, for high data rate communications, multipath interference causes an envelope fluctuation of an angle modulated signal that is in the same frequency range as that caused by co-channel interference. The mathematical discussion below shows that, for high data rate communications, multipath interference causes an envelope fluctuation of an angle modulated signal that is in the same frequency range as that caused by co-channel interference.

It is supposed that the desired signal is represented as

$$e_1(t) = S(t) \sin (w_1 t + \Delta w_1/P_1 \sin P_1 t) \qquad (1)$$

with amplitude $S(t)$ at carrier frequency $w_1$. This signal is sinusoidally frequency modulated at a modulating frequency of $P_1$ with peak frequency deviation of $\Delta w_1$.

Similarly, let

$$e_2(t) = I(t) \sin (w_2 t + \phi + \Delta w_2/P_2 \sin (P_2 t + \theta)) \qquad (2)$$

represent an interfering signal with amplitude $I(t)$, carrier frequency $w_2$, modulating frequency $P_2$ and peak frequency deviation $\Delta w_2$. The factors $\phi$ and $\theta$ are arbitrary phase offsets, in the carrier and modulating waveforms, respectively, between the desired signal and interfering signal.

With the foregoing as background, consider the instance when the interfering signal is produced by multipath propagation with time delay $T_d$. In this case, certain parameters of the interfering signal are related to the desired signal, i.e.,

$$w_1 = w_2 \qquad (3)$$
$$\Delta w_1 = \Delta w_2 \qquad (4)$$
$$P_1 = P_2 \qquad (5)$$
$$\theta = P_2 T_d = P_1 T_d \qquad (6)$$

The factors $I(t)$ and $\phi$ are still independent, because they are affected by properties of the reflecting surfaces producing the multipath signal. They are, therefore, unpredictable.

Substituting equations 3-6 into equation 2, results in

$$e_2(t) = I(t) \sin(w_1 t + \phi + \Delta w_1/P_1 \sin(P_1(t-T_D)))$$

Summing $e_1(t)$ and $e_2(t)$ represents the resultant signal seen by the receiver. This composite signal is a combination of the desired signal plus a delayed "echo" due to multipath interference which has both amplitude and frequency fluctuations. However, the primary concern is the unique amplitude (envelope) fluctuation caused by the multipath interference.

Letting the squared envelope of the composite signal (power envelope) be represented by:

$$R^2(t) = |e_1(t) + e_2(t)|^2, \qquad (8)$$

and making the substitutions given in equations 3-6, results in

$$R^2(t) = S^2(t) + I^2(t) + 2 S(t)I(t) \cos Y(t) \qquad (9)$$

where

$$Y(t) = \phi + \Delta w_1 P \cdot (\sin P_1(t-T_D) - \sin P \cdot \tau$$
$$= \phi + 2\Delta w_1 P_1$$
$$\bullet [\cos (P \cdot t - P \cdot T_D/2) \sin (-P \cdot T_D/2)] \qquad (10)$$

Two of the components of $R^2(t)$, namely $S^2(t)$ and $I^2(t)$, represent the slowly varying amplitude of the desired and interfering signals, respectively. The third component, $[2 S(t) \bullet I(t) \bullet \cos Y(t)]$, represents the higher frequency envelope fluctuations due to the combination of the desired signal plus multipath interference. Because it is known that the frequency of fluctuations caused by this third component is approximately $d/dt\ Y(t)$, from equation 10, it can be recognized that

$$d/dt\ Y(t) = -2 \Delta w_1 [\sin (P_1 t - P \cdot T_D/2) \sin(-P \cdot T_D/2)] \qquad (11)$$

Thus, the peak frequency of envelope fluctuations due to multipath is equal to twice the peak frequency deviation of the original modulation. In a high speed data system employing FSK modulation, this peak frequency deviation will be typically in the range of several kilohertz to several megahertz. On the other hand, the envelope fluctuations due to time variations of $S(t)$ and $I(t)$ will typically occur at rates from zero Hertz to a few dozen Hertz, where the upper frequency limit is set by the Doppler frequency associated with the motion of the receiver (or reflector) through the electromagnetic field produced by the carrier wave of the signal at frequency $w_1$.

Furthermore, it can be shown that there is a direct relationship between the percentage of amplitude modulation on the envelope of the received signal and the ratio of interference to desired signal. Assuming, for the moment that

$$2 \Delta w_1/P_1 \mid \sin (P_1 T_D/2) \mid \geq \pi, \qquad (12)$$

then the $[\cos Y(t)]$ term in equation 9 can be replaced by its extreme values $(\pm 1)$, giving:

$$\text{Max } (R(t)) = S(t) + I(t)$$
$$\text{Min } (R(t)) = S(t) - I(t) \qquad (13)$$

Defining the AM modulation index as half of the difference between the maximum and minimum values of $R(t)$, divided by the average value of $R(t)$, we get the interference to signal ratio directly:

$$AM = [1\cdot 2 \ (\text{Max } (R(t)) - \text{Min } (R(t)))]/ \ [1/2 \ (\text{Max } (R(t)) + \text{Min } (R(t)))]$$
$$= I(t)/S(t) \qquad (14)$$

Referring once again to equation 12, the consequences of this assumption will be explained. First, in order for equation 12 to strictly apply:

$$\Delta w_1/P_1 \geq \pi/2, \qquad (15)$$

i.e., the FM modulation index must be greater than 1.4.

Secondly, the sine term must be near its maximum, i.e.,

$$P_1 T_D \simeq n \ \pi/2, \text{ for } n \text{ odd.} \qquad (16)$$

This is equivalent to saying that the multipath delay should be an odd multiple of half the period of the modulating waveform. In a digital communication system, this is equivalent to saying that the delay is at least one (odd) number of bit (or symbol) periods. This is the same condition that leads to maximum intersymbol interference in a digital communication system.

Accordingly, in a relatively high data rate communication system, the instantaneous frequency offset of an angle modulated signal resulting from either co-channel or multipath interference produces a higher frequency variation in the envelope than is produced by (Rayleigh) fading.

The IDC 135 is arranged to take advantage of another discovery made pursuant to the present invention: the logarithmic envelope detector 150 can rapidly provide a direct indication of the amount of interference on the received (IF) signal without the need for averaging the more slowly varying mean signal strength, thereby allowing a more rapid response time than circuits which require averaging of signal strength. More specifically, the logarithmic envelope detector 150 will provide an AC output signal having a magnitude that is directly related to the percentage of amplitude modulation in the envelope of the received (IF) signal regardless of the absolute magnitude of the received (IF) signal.

The amplitude modulated IF signal received by the logarithmic envelope detector 150 is expressed mathematically as:

$$S(t) = S_o \ (1 + A_m \sin w_m t) \sin w_c t \qquad (1)$$

where:

$S_o$ is the average signal strength;

$A_m$ is the modulation level ($\% \ AM = 100 \times A_m$);

$w_m$ is the modulating frequency; and

$w_c$ is the carrier frequency (IF).

The envelope function of $S(t)$ may be obtained by removing the $w_c t$ term from equation (1), resulting in:

$$R(t) = \text{Env } [s(t)] = S_o \ (1 + A_m \sin w_m t) \qquad (2)$$

Taking the logarithm of both sides of equation (2) yields:

$$\text{Log } R(t) = \text{Log } S_o + \text{Log } (1 + A_m \sin w_m t) \qquad (3)$$

The D.C. component of the envelope function (or the average signal strength) can be recognized from equation (3) as the term $\text{Log } S_o$, while the term $\text{Log } (1 + A_m \sin w_m t)$ can be recognized as the AC component of the envelope function having maxima and minima of $\text{Log } (1 + A_m)$ and $\text{Log } (1 - A_m)$, respectively.

The relationship between the % AM, Am, minima, maxima, Peak to Peak (P-P) AC Swing and P-P AC

6

of equation (3) is summarized in the table below which includes computational data based on the foregoing equations, and assuming that $S_o = 1$ (if $S_o$ is larger, the P-P AC Swing table entries would not be effected due to the subtraction of the minima and maxima terms).

| %AM | $A_m$ | Log R(t) | | P-P AC Swing | (P-P AC)/$A_m$ |
|---|---|---|---|---|---|
| | | Min | Max | | |
| 2 | .02 | -.009 | .009 | .018 | .90 |
| 5 | .05 | -.022 | .021 | .043 | .86 |
| 10 | .1 | -.046 | .041 | .087 | .87 |
| 20 | .2 | -.097 | .079 | .176 | .88 |
| 50 | .5 | -.301 | .176 | .477 | .95 |
| 70 | .7 | -.523 | .203 | .753 | 1.08 |
| 80 | .8 | -.699 | .255 | .954 | 1.19 |
| 90 | .9 | -1.000 | .279 | 1.279 | 1.42 |
| 100 | 1.0 | -infinity | .301 | infinity | infinity |

The first two columns of the table indicate the actual percentage of amplitude modulation imposed onto the received (IF) signal and the corresponding fraction thereof (%/100), respectively. The third and fourth columns indicate the previously discussed minima and maxima terms from equation (3), respectively. The fifth column, representing the P-P AC Swing, is the maxima table entry for the corresponding amount of AM less the corresponding minima table entry. The last column indicates the relationship of correspondence between the P-P AC Swing measurement and the amount of AM, i.e.
[P-P AC Swing measurement/amount of AM].

The last column in the above table indicates that for $A_m$ between 0 to .8, the P-P AC Swing coincides directly with $A_m$ to within ± 20% accuracy. In critical situations, the accuracy of the measured value of $A_m$ could be improved by using a look-up table to relate the measured P-P AC Swing to $A_m$. In summary, this illustrates that the output of a logarithmic envelope detector can provide a direct indication of the amount of amplitude modulation on the received (IF) signal.

In sum, the foregoing discussion shows that:
co-channel and/or multipath interference causes amplitude modulation on the received (IF) signal at about the same frequency;
such interference amplitude-modulates the received (IF) signal at a higher frequency than the amplitude modulation produced by fading; and
the P-P AC Swing developed at the output of a Log envelope detector coincides with the amount of co-channel and/or multipath interference on the received (IF) signal.

In accordance with these discoveries and principles, in Fig. 1c, the IDC 135 from Fig. 1b is shown in expanded form to include a logarithmic (Log) envelope detector 150, a high pass filter (HPF) 152, a level indicator 154 and a comparator 156. Log envelope detectors are conventionally included as part of cellular radio equipment. The circuit arrangement of Fig. 1c employs the logarithmic (Log) envelope detector 150 to develop an output signal representing the Log envelope of the received (IF) signal. The (HPF) 152 receives the output signal from the detector 150 to filter out the DC term at the output of the Log envelope detector as well as the low frequency modulation produced by any fading which might be present on the received (IF) signal. The level indicator 154 receives the output of the HPF 152 to analyze the P-P AC Swing voltages, described with the above table, and to develop a corresponding signal representative of the amount of modulation therefrom. The comparator 156 employs a reference voltage ($V_{ref}$) at one of its inputs (with hysteresis via resistors 157 and 159) and the output of the level indicator 154 at the other of its inputs. The reference voltage sets a threshold level against which the output of the level indicator is compared. Since the level indicator indicates the amount of AM due to co-channel and/or multipath interference, when this threshold level is exceeded, the microcomputer 138 (Fig. 1a) is alarmed by the output of the comparator 156.

The Log envelope detector 150 can be employed using a conventional integrated circuit such as those used for RSSI (received signal strength indicator) measurements in cellular radios. For example, an integrated circuit such as an MC3363 available from Motorola, Inc., is adequate. Generally, such circuits are described in "Applications IC Handbook", Plessey Semiconductors', PSI 1828, pp. 31-39. incorporated herein by reference.

HPF 152 can remove the DC component from the log detector output signal and any fading induced low frequency AC component by setting the cutoff frequency of the HPF 152 adequately high. This allows the microcomputer 138 to base the interference measurement solely on interference due to co-channel and/or multipath interference. Preferably, the cutoff frequency of the HPF 152 is set to the lowest modulating frequency expected on the received (IF) signal since the main component of the AC waveform from the Log detector is at the modulating frequency. In many data applications, the "lowest" modulating frequency is about 1/10th of the bit rate (assuming that some type of protocol, e.g., Manchester coding, is used to eliminate long strings of binary 1's or 0's from the data stream).

In systems employing a data communication rate which is significantly larger than the maximum Doppler frequency, the HPF 152 can be implemented using a conventional R-C (resistor-capacitor) section filter. Otherwise, a conventional (multi-pole) high pass or band pass filter may be used to remove the undesired low frequency information.

The level indicator 154 in Fig. 1c includes a maximum peak detector 160 and a minimum peak detector 162 for respectively detecting the envelope function's maxima and minima, i.e., the Log $(1 + A_m)$ and Log $(1 - A_m)$ terms from equation 3. The latter of these two terms is effectively subtracted from the former by a conventional summing circuit 164. The output of the summing circuit 164 provides a signal representative of the P-P AC Swing voltage measured on the logarithmic envelope of the received (IF) signal (representing the level of interference on the received (IF) signal).

Alternatively, the signal representative of the P-P AC Swing voltage can be provided directly to an analog to digital input port for analysis by the microcomputer, or the reference voltage $(V_{ref})$ can be variably controlled by the microcomputer to allow automatic flexibility to the threshold inference level.

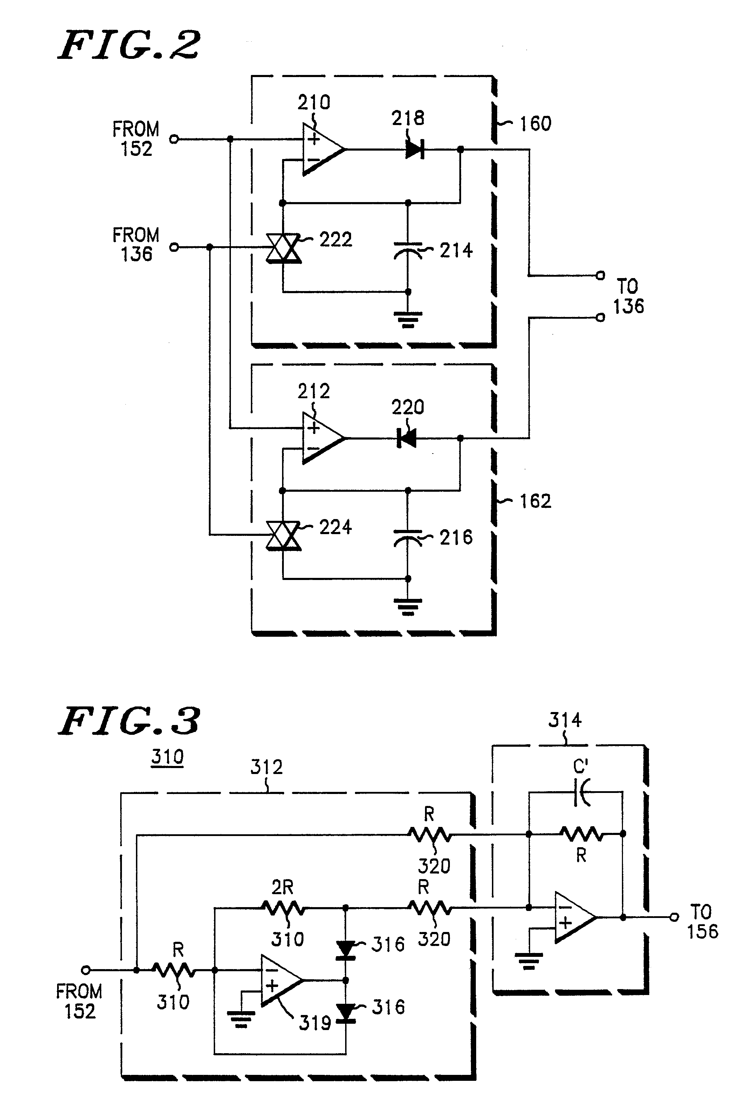

Fig. 2 illustrates an implementation of the peak detectors 160 and 162. Each peak detector 160 or 162 includes a differential amplifier 210 or 212 which is used to charge a capacitor 214 or 216 through a diode 214 or 216, respectively. A transmission gate 222 or 224 is employed within each detector 160 and 162 to reset the charge on the respective capacitor 214 or 216 under control of the microcomputer 138. For more details on peak detectors, reference may be made to Operational Amplifier Characteristics & Applications, Robert, G. Irvine, Prentice Hall, 1981, page 197, incorporated herein by reference.

Fig. 3 illustrates a conventional average level indicator 310 which may be used in place of the level indicator 154 of Fig. 1c. In Fig. 3, the average level indicator 310 includes a full-wave rectifier 312 in combination with a low pass filter (C') 314. The full-wave rectifier 312 employs an operational amplifier 319, a pair of diodes 316 and resistors 318 to provide to fully rectified signal to the low pass filter 314. Two additional resistors 320 are used to add the fully rectified signal to the signal received from the HPF 152. The sum signal, provided therefrom, is received by the low pass filter 314 to provide an averaging of the rectified AC signal. For more details, reference may be made to Operational Amplifier Characteristics & Applications, supra at 175.

In Fig. 4a, a flow chart illustrates a manner in which the IDC 135 of Fig. 1b can be used by the microcomputer 138 of Fig. 1b to effect a handoff of a radiotelephone call by the base station equipment of Fig. 1b. The flow chart begins at block 410 where a radiotelephone unit is depicted in an active call. From block 410, flow proceeds to block 420 where a test is performed to determine if a handoff instruction from the switch controller has been received. If the handoff instruction was not received, flow proceeds to block 430 where the microcomputer analyzes the signal strength of the unit in the active call.

At block 440, the microcomputer performs a test to determine whether or not the analyzed signal strength is acceptable for continued communication. If the signal strength is adequate, flow proceeds to blocks 450 and 460 where the microcomputer checks the output of the IDC to determine if the threshold level (indicating excessive co-channel and/or multipath interference) has been exceeded. If the threshold level has not been exceeded, flow proceeds from block 460 to block 470 where the microcomputer proceeds to execute general background tasks. Of course, the steps 410-460 would be periodically executed to maintain acceptable communication for the radiotelephone in the active call.

From either blocks 430 or 460, flow proceeds to block 480 when the integrity of the radiotelephone communication channel is detected as unacceptable (due to failure of the signal strength test or interference test, respectively). Thus at block 480 the microcomputer informs the switch controller (Fig 1a) so that the switch controller can determine if the active call can be handed off to an adjacent cell cite. From block 480, while the switch controller is making such a determination, flow returns to block 410 where the unit is still in an active call. From block 410, as previously indicated, the microcomputer determines if a handoff instruction from the switch controller has been received.

If a handoff instruction has been received, flow proceeds from block 420 to block 490 where the base site equipment implements the handoff. This is typically accomplished by transmitting a message to the radiotelephone unit to instruct the radiotelephone to continue communication on a designated channel in a designated cell. For more detail of the handoff process, reference may be made to U.S. Pat. Nos. 4,654,867 and 4,485,486, supra.

The present invention is also capable of responding to corrupting additive gaussian noise as well as the two types of deterministic interference described above. This may be seen by comparing the narrowband representation of noise and the interference as defined in equation 2 above. Narrowband noise may be expressed as $v_n(t) = N(t) \sin (w_c t + \theta_n(t))$, where $N(t)$ is a gaussian random variable and $\theta_n(t)$ is the random phase with uniform distribution between $-\pi$ and $+\pi$. Comparing this with equation 2 yields:

$$I(t) = N(t)$$
$$w_2 = w_c$$
$$\phi + \Delta w_2/P_2 \sin(P_2 t + \Theta) = \Theta_n(t)$$

A rigorous analysis of a carrier plus noise has been performed in "Statistical Properties of a Sine Wave Plus Random Noise", by S. O. Rice, Bell System Technical Journal, Vol. 27, Jan. 1948, pp. 109-157, incorporated herein by reference. It is sufficient to recognize that the additive gaussian noise introduces amplitude variation into the envelope of received signal. This amplitude variation has significant spectral components up to about one-half of the IF bandwidth, and can be distinguished from the fading induced amplitude variation by means of the present invention as shown in Fig. 1c. The detector described may thus be used to measure the signal-to-noise ratio as well as the signal-to-interference ratio.

In mobile communication systems, the desired signal may be corrupted by various types of interference and by random noise (in weak signal conditions). Some systems use received signal strength alone as an estimate of channel quality and are susceptible to errors due to varying levels of ambient noise. Other systems combine signal strength with other measurements to estimate channel quality. By responding to the relative level of desired signal to co-channel interference, multi-path interference and gaussian noise, the present invention provides a better estimate of the channel quality than does signal strength alone and is less complex than using a combination of multiple, separate measurements to estimate channel quality.

The circuit of Fig. 1c has a further advantage over conventional signal strength indications [used to estimate signal-to-noise ratio] in that its output is insensitive to DC bias shifts in the output of the logarithmic envelope detector.

Logarithmic envelope detectors, such as those used in the aforementioned MC3363 integrated circuit, have an output DC bias level which is added to the (true) output signal developed in response to the actual (IF) signal input. The magnitude of this DC bias level varies, dependent upon operating conditions, such as supply voltage and ambient temperature which may vary in an uncontrolled manner. Therefore, in order to give an accurate indication, conventional signal strength indicators, which merely time-average the output of the logarithmic envelope detector, must contain elaborate compensating circuits to counteract these uncontrolled variations in the DC bias level.

Since the aforementioned signal strength indicator is normally used to estimate signal-to-noise ratio, it may be directly replaced with a signal-tonoise ratio indicator using the circuitry of the present invention. This eliminates the need to compensate for DC bias level variations, since the DC bias level is automatically eliminated by the high pass filter 152.

It will be understood by those skilled in the art that the foregoing illustrations and discussions merely exemplify preferred embodiments of the present invention and that various modifications and changes may be made to the present invention without departing from the spirit and scope of the following claims. For example, the IDC could readily be implemented using digital circuitry and digital signal processing techniques which implement similar functions as the analog counterparts described herein. Such circuitry could be implemented in a time division multiplex access (TDMA) cellular system rather than an analog cellular system as described above.

In Fig. 4b, a flow chart, in accordance with the present invention, illustrates a manner in which the IDC 135 of Fig. 1b can be used by the microcomputer 138 of Fig. 1b to implement a change in the level of error correction coding between a radiotelephone unit 130 and the base station equipment 115 of Fig. 1b. The flow chart begins at block 410 where a radiotelephone unit is depicted in an active call with the base site equipment. From block 410, flow proceeds to block 430 where a test is performed to determine the strength of the signal being transmitted from the radiotelephone unit.

At block 440, the microcomputer performs a test to determine whether or not the signal strength is acceptable for continued communication. If the signal strength is not adequate, flow proceeds to blocks 480 and 488 where the microcomputer informs the switch controller of this condition and then proceeds to execute conventional background tasks. If the signal strength is adequate, flow proceeds from block 440 to blocks 450 and 460, where the microcomputer checks the output of the IDC to determine if the threshold level (indicating excessive co-channel and/or multipath interference) has been exceeded. Of course, the steps 410-460 would be periodically executed to maintain acceptable communication for the radiotelephone in the active call.

From block 460, flow proceeds to block 465 if the threshold level has been exceeded. At block 465, a test is performed to determine if the data rate presently employed is at the minimum level. If not, the effective bit rate is decreased one step, block 170, and flow proceeds to block 488. If the data rate presently employed is at the minimum level, flow proceeds to block 480 where the microcomputer informs the switch controller of this condition.

If the microcomputer determines that the IDC threshold has not been exceeded, flow proceeds from block 460 to block 475. At block 475, the microcomputer determines if an improvement to the effective data rate should be attempted. Such a determination is conventional, and can include factors such as whether the rate is already at a maximum rate, how recent such an attempt was made, or the priority of other tasks that require execution. Based on such considerations, if the microcomputer determines that an improvement to the effective data bit rate should be attempted, flow proceeds to block 495.

At block 495, the effective data bit rate is increased one step, and flow returns therefrom to block 450 to determine if the signal integrity is still acceptable. If the microcomputer determines that an improvement to the effective data bit rate should not be attempted, flow proceeds to block 495.

Preferably, the changes to the effective data bit rate involve changing the amount of error correction coding in the signal, and/or directly changing the transmission bit rate. The former approach can be accomplished by changing the communication protocol between one which requires no error coding bits and one which requires varying levels of error coding. The latter approach, directly changing the transmission bit rate, is conventionally employed in systems having a plurality of fixed data bit rates from which to select.

It will be understood by those skilled in the art that the foregoing illustrations and discussions merely exemplify preferred embodiments of the present invention and that various modifications and changes may be made to the present invention without departing from the spirit and scope of the following claims. For example, the IDC could readily be implemented using digital circuitry and digital signal processing techniques which implement similar functions as the analog counterparts described herein. Such circuitry could be implemented in a time division multiplex access (TDMA) cellular system rather than an analog cellular system as described above.

Another variation of the present invention could entail employing an alternative procedure to that illustrated in Fig. 4. For example, the procedure described in "Optimal Baud Rate Transmission System", U.S. Pat. Application No. 4,748,625, assigned to the present assignee and incorporated herein by reference, can be adapted to similarly employ the IDC.

## Claims

1. A circuit for detecting and indicating a level of interference on a high frequency angular modulated signal, characterized by:
a logarithmic envelope detector for receiving the high frequency angular modulated signal and for providing a log envelope signal;
a filter for removing a particular range of undesired frequencies from the log envelope signal; and
means, responsive to said filtered log envelope signal, for indicating a level of interference.

2. A circuit for detecting and indicating a level of interference on a high frequency angular modulated signal, according to claim 1, wherein said filtered undesired frequencies includes frequencies at and below frequencies caused by fading.

3. A circuit for detecting and indicating a level of interference on a high frequency angular modulated signal, according to claim 1, wherein said means for indicating includes means for providing a signal representative of the average magnitude of the filtered log envelope signal.

4. A circuit for detecting and indicating a level of interference on a high frequency angular modulated signal, according to claim 1, wherein said means for indicating includes means for detecting a level of the filtered log envelope signal that exceeds a threshold level.

5. A circuit for detecting and indicating a level of interference on a high frequency angular modulated signal, according to claim 1, wherein said means for indicating includes means for detecting a maximum level and a minimum level of the filtered log envelope signal.

6. A circuit for detecting and indicating a level of interference on a high frequency angular modulated signal, according to claim 5, wherein said means for indicating includes means for combining the detected maximum level and minimum level of the filtered log envelope signal.

7. A circuit for detecting and indicating a level of interference on a high frequency angular modulated signal, according to claim 6, wherein said means for indicating includes means for detecting if the combined maximum and minimum levels of the filtered log envelope signal exceeds a threshold level.

8. A circuit for detecting and indicating a level of interference on a high frequency angular modulated signal, according to claim 1, wherein said means for indicating includes means for resetting the maximum level and the minimum level of the filtered log envelope signal.

9. A circuit for detecting and indicating a level of multipath interference in a high frequency angular modulated signal, characterized by:

means 150, responsive to the envelope of the high frequency angular modulated signal, for providing a first output signal therefrom;

a filter 152 for removing a particular range of undesired frequencies from the first output signal; and

means 154, responsive to said filter, for indicating a level of multipath interference based on the detected amplitude modulation on the high frequency angular modulated signal.

10. For use in a cellular radiotelephone communication system having a plurality of cell sites, wherein each cell site has associated base site equipment and corresponding radiotelephone communication coverage areas and each cell site employs a plurality of angular modulated frequencies which are used for radiotelephone communication, said base site equipment at each cell site characterized by:

base radio equipment for communicating with the radiotelephones;

a circuit, responsive to said base radio equipment, for detecting and indicating a level of interference on communication frequencies within said cell including:

a logarithmic envelope detector for receiving the high frequency angular modulated signal and for providing a log envelope signal, a filter 152 for removing a particular range of undesired frequencies from the log envelope signal, and

means, responsive to said filtered log envelope signal, for indicating a level of interference 154; and

processing means for analyzing signals received from said base radio equipment and said circuit.

11. For use in a cellular radiotelephone communication system having a plurality of cell sites, wherein each cell site has associated base site equipment and corresponding radiotelephone communication coverage areas and each cell site employs a plurality of angular modulated frequencies which are used for radiotelephone communication, said base site equipment at each cell site characterized by:

base radio equipment for communicating with the radiotelephones;

a circuit, responsive to said base radio equipment, for detecting and indicating a level of multipath interference on communication frequencies within said cell including:

means 150, responsive to the envelope of the high frequency angular modulated signal, for providing a first output signal therefrom; a filter 152 for removing a particular range of undesired frequencies from the first output signal; and

means 154, responsive to said filter, for indicating a level of multipath interference based on the detected amplitude modulation on the high frequency angular modulated signal; and

processing means for analyzing signals received form said base radio equipment and said circuit.

12. A circuit for detecting and indicating a level of interference, which interference may include multipath, co-channel and gaussian noise interference, on a high frequency angular modulated signal, characterized by:

a logarithmic envelope detector for receiving the high frequency angular modulated signal and for providing a log envelope signal;

a filter for removing at least a relatively low range of frequencies from the log envelope signal which result from fading; and

average level detect means, coupled to receive said filtered log envelope signal, including:

rectifying means for rectifying the filtered log envelope signal,

low pass filter means. responsive to said rectified filter log envelope signal, to average the rectified log envelope signal, and

means, responsive to the low pass filter means, for indicating a level of interference.

13. A circuit for detecting and indicating a level of interference. which interference may include multipath, co-channel and gaussian noise interference, on a high frequency angular modulated signal, characterized by:

a logarithmic envelope detector 150 for receiving the high frequency angular modulated signal and for providing a log envelope signal;

a filter 152 for removing at least a relatively low range of frequencies from the log envelope signal which result from fading;

level detection means 154, coupled to receive said filtered log envelope signal, including:

11

means for detecting a maximum level and a minimum level of the filtered log envelope signal 160/162, and means for combining 164 the detected maximum level and minimum level of the filtered log envelope signal,

detecting means 156 for detecting if the combined maximum and minimum levels of the filtered log envelope signal exceeds a threshold level; and

means, responsive to said detecting means, for indicating a level of interference.

14. A circuit for detecting and indicating a level of interference, according to claim 13, further including: control means coupled to said level detection means, and

means, responsive to said control means, for resetting the maximum level and the minimum level of the filtered log envelope signal.

15. A circuit for controlling the communication efficiency in an RF data communication path between a first unit and a second unit communicating via high frequency angular modulation, characterized by:

detection means for detecting the signal integrity of the communicated data, including:

a logarithmic envelope detector 150 for receiving the high frequency angular modulated signal and for providing a log envelope signal,

a filter 152 for removing a particular range of undesired frequencies from the log envelope signal, and

means, responsive to said filtered log envelope signal, for indicating a level of interference 154; and

means, responsive to said detection means, for changing the communication process to improve the integrity of the communication path.

16. A circuit, according to claim 15, wherein said filtered undesired frequencies includes frequencies at and below frequencies caused by fading.

17. A circuit, according to claim 15, wherein said means for indicating includes means for providing a signal representative of the average magnitude of the filtered log envelope signal.

18. A circuit, according to claim 15, wherein said means for indicating includes means for detecting a level of the filtered log envelope signal that exceeds a threshold level.

19. A circuit, according to claim 15, wherein said means for indicating includes means for detecting a maximum level and a minimum level of the filtered log envelope signal.

20. A circuit, according to claim 19, wherein said means for indicating includes means for combining the detected maximum level and minimum level of the filtered log envelope signal.

21. A circuit, according to claim 20, wherein said means for indicating includes means for detecting if the combined maximum and minimum levels of the filtered log envelope signal exceeds a threshold level.

22. A circuit, according to claim 15, wherein said means for indicating includes means for resetting the maximum level and the minimum level of the filtered log envelope signal.

23. For use in a cellular radiotelephone communication system having a plurality of cell sites, wherein each cell site has associated base site equipment and corresponding radiotelephone communication coverage areas and each cell site employs a plurality of angular modulated frequencies which are used for radiotelephone communication, said base site equipment at each cell site characterized by:

base radio equipment for communicating with the radiotelephones;

a circuit, responsive to said base radio equipment, for detecting and indicating a level of interference on communication frequencies within said cell including:

a logarithmic envelope detector 150 for receiving the high frequency angular modulated signal and for providing a log envelope signal,

a filter 152 for removing a particular range of undesired frequencies from the log envelope signal, and

means, responsive to said filtered log envelope signal, for indicating a level of interference 154; and

processing means, responsive to said base radio equipment and said circuit, for changing the communication process to improve the integrity of at least one respective RF data communication path between a radiotelephone and the associated base site equipment.

**FIG. 1A**

(SITE 1)

(SITE 2)

110

130 — RADIO TELEPHONE UNIT

112

115

BASE TRANSCEIVERS

BASE SITE 1 CONTROLLER

114

116

119

BASE SITE 2 CONTROLLER

BASE TRANSCEIVERS

120

118

121 — SIGNAL PROCESSING UNIT

122

125

123 — DIGITAL SWITCHING NETWORK

PCM CONVERTERS

131

PUBLIC SWITCHED TELEPHONE NETWORK

EP 0 344 539 A2

*FIG.1B*

BASE SITE EQUIPMENT
115,119

*FIG.1C*

I.D.C.
135

# FIG.2

# FIG.3

FIG.4a

FIG. 4b